(19) Europäisches Patentamt
European Patent Office
Office européen des brevets

(11) **EP 3 811 505 B1**

(12) **FASCICULE DE BREVET EUROPEEN**

(45) Date de publication et mention de la délivrance du brevet:
**15.05.2024 Bulletin 2024/20**

(21) Numéro de dépôt: **19745714.6**

(22) Date de dépôt: **25.06.2019**

(51) Classification Internationale des Brevets (IPC):
**H02K 29/03** $^{(2006.01)}$ **H02K 21/14** $^{(2006.01)}$
**H02K 1/276** $^{(2022.01)}$

(52) Classification Coopérative des Brevets (CPC):
**H02K 21/14; H02K 1/2766; H02K 29/03;**
H02K 2213/03

(86) Numéro de dépôt international:
**PCT/FR2019/051565**

(87) Numéro de publication internationale:
**WO 2020/002827 (02.01.2020 Gazette 2020/01)**

(54) **MACHINE ÉLECTRIQUE TOURNANTE AYANT UNE CONFIGURATION DE ROTOR RÉDUISANT LES ONDULATIONS DE COUPLE**

ELEKTRISCH UMLAUFENDE MASCHINE MIT LÄUFERANORDNUNG ZUR VERMINDERUNG DER DREHMOMENTSCHWANKUNGEN

ROTATING ELECTRICAL MACHINE HAVING A ROTOR CONFIGURATION REDUCING TORQUE RIPPLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.06.2018 FR 1855653**

(43) Date de publication de la demande:
**28.04.2021 Bulletin 2021/17**

(73) Titulaire: **VALEO EQUIPEMENTS ELECTRIQUES MOTEUR**
**94046 Créteil Cedex (FR)**

(72) Inventeurs:
• **FRATILA, Radu**
**94046 CRETEIL CEDEX (FR)**
• **KALOUN, Adham**
**94046 CRETEIL CEDEX (FR)**

(74) Mandataire: **Valeo Powertrain Systems**
**Service Propriété Intellectuelle**
**Immeuble le Delta**
**14, avenue des Béguines**
**95892 Cergy Pontoise (FR)**

(56) Documents cités:
**EP-A1- 1 450 462      EP-A2- 2 131 475**
**GB-A- 2 508 971        US-A1- 2002 047 432**

**Description**

L'invention porte sur une machine électrique tournante ayant une configuration de rotor réduisant les ondulations de couple. L'invention trouve une application particulièrement avantageuse, mais non exclusive, avec les machines électriques tournantes utilisées dans les véhicules automobiles. De façon connue en soi, les machines électriques tournantes comportent un stator et un rotor solidaire d'un arbre. Le rotor pourra être solidaire d'un arbre menant et/ou mené et pourra appartenir à une machine électrique tournante sous la forme d'un alternateur, d'un moteur électrique, ou d'une machine réversible pouvant fonctionner dans les deux modes.

Le rotor comporte un corps formé par un empilage de feuilles de tôles maintenues sous forme de paquet au moyen d'un système de fixation adapté. Le rotor comporte des pôles formés par des aimants permanents logés dans des cavités ménagées dans le corps de rotor.

Par ailleurs, le stator est monté dans un carter configuré pour porter à rotation l'arbre de rotor par exemple par l'intermédiaire de roulements. Le stator comporte un corps muni d'une pluralité de dents définissant des encoches, et un bobinage inséré dans les encoches du stator. Le bobinage est obtenu par exemple à partir de fils continus recouverts d'émail ou à partir d'éléments conducteurs en forme d'épingles reliées entre elles par soudage. Dans le cas d'un stator comportant au moins un groupe d'enroulements triphasés utilisé en combinaison avec un rotor muni de pôles formés par des aimants enterrés, on observe des ondulations de couple qui nuisent aux performances de la machine électrique.

L'invention vise à remédier efficacement à cet inconvénient en proposant une machine électrique tournante selon la revendication 1, notamment pour véhicule automobile comportant:

- un stator comprenant un corps muni de dents délimitant des encoches et un bobinage logé dans les encoches du corps de stator,
- un rotor comprenant un corps et des pôles formés par des aimants permanents,

caractérisée en ce que

- deux angles polaires successifs correspondant chacun à une étendue circonférentielle d'un pôle ou
- deux angles polaires doubles successifs correspondant chacun à une étendue circonférentielle de deux pôles adjacents,
- présentent un écart angulaire l'un par rapport à l'autre qui est fonction d'un paramètre de décalage angulaire lié à un pas statorique.

L'invention permet ainsi, grâce à l'introduction de l'écart angulaire entre deux angles polaires ou entre deux angles polaires doubles successifs, de compenser l'effet de distorsion du champ rotorique ("rotor skewing" en anglais) afin de réduire les ondulations de couple et ce sans limitation technique liée notamment à des problèmes de fuite de flux. L'invention présente également l'avantage de ne pas augmenter excessivement la durée de développement, dans la mesure où les calculs et les simulations peuvent être réalisés en deux dimensions.

Selon une réalisation, le paramètre de décalage angulaire est compris entre 0.5 et 1.5 fois le pas statorique.

L'angle polaire double est défini par la relation suivante:

$$A_x = 360/P - \delta/2 + x^* \, \delta/(P-1)$$

- x étant le rang de l'angle polaire double, soit un nombre entier compris entre 0 et P-1,
- P étant le nombre de paires de pôles,
- δ étant le paramètre de décalage angulaire.

L'angle polaire est défini par la relation suivante:

$$A_{x'} = 180/P - \delta/2 + x^* \, \delta/(2P-1)$$

- x étant le rang de l'angle polaire, soit un nombre entier compris entre 0 et 2P-1,
- P étant le nombre de paires de pôles,
- δ étant le paramètre de décalage angulaire.

Selon une réalisation, le rang de l'angle polaire double ou de l'angle polaire est croissant lorsqu'on suit un sens de parcours donné suivant une circonférence du rotor.

Selon une réalisation, chaque pôle est formé par deux aimants permanents ayant une forme en V.

Selon une réalisation, chaque pôle est formé par un aimant permanent orienté orthoradialement par rapport à un axe du rotor.

Selon une réalisation, un nombre d'encoches par pôle et par phase compris entre 1 et 3.

Selon une réalisation, un nombre de paires de pôles est compris entre 3 et 10.

Selon une réalisation, le bobinage comprend un nombre de phases compris entre 3 et 6.

L'invention sera mieux comprise à la lecture de la description qui suit et à l'examen des figures qui l'accompagnent. Ces figures ne sont données qu'à titre illustratif mais nullement limitatif de l'invention.

La figure 1 est une vue en coupe transversale de la machine électrique tournante selon l'invention;

La figure 2 montre un rotor appartenant à la machine électrique tournante selon l'invention;

Les figures 3a et 3b illustrent l'introduction d'un décalage angulaire entre deux angles polaires doubles successifs respectivement pour un rotor à 3 paires de pôles et à 5 paires de pôles;

Les figures 4a et 4b illustrent l'introduction d'un décalage angulaire entre deux angles polaires successifs respectivement pour un rotor à 3 paires de pôles et à 5 paires de pôles;

Les figures 5a à 5c montrent respectivement l'évolution des ondulations de couple, du couple, et des distorsions harmoniques totales en fonction du paramètre de décalage angulaire respectivement pour un décalage angulaire polaire et un décalage angulaire dans une paire de pôles;

La figure 5d est une représentation graphique d'une tension à vide de la machine électrique obtenue respectivement pour un rotor classique et un rotor intégrant un décalage angulaire entre deux angles polaires successifs;

La figure 6 montre une variante de réalisation du rotor selon l'invention muni d'aimants orientés orthoradialement;

Les figures 7a et 7b sont des vues illustrant l'introduction d'un paramètre de décalage angulaire choisi de façon aléatoire.

Les éléments identiques, similaires ou analogues conservent la même référence d'une figure à l'autre.

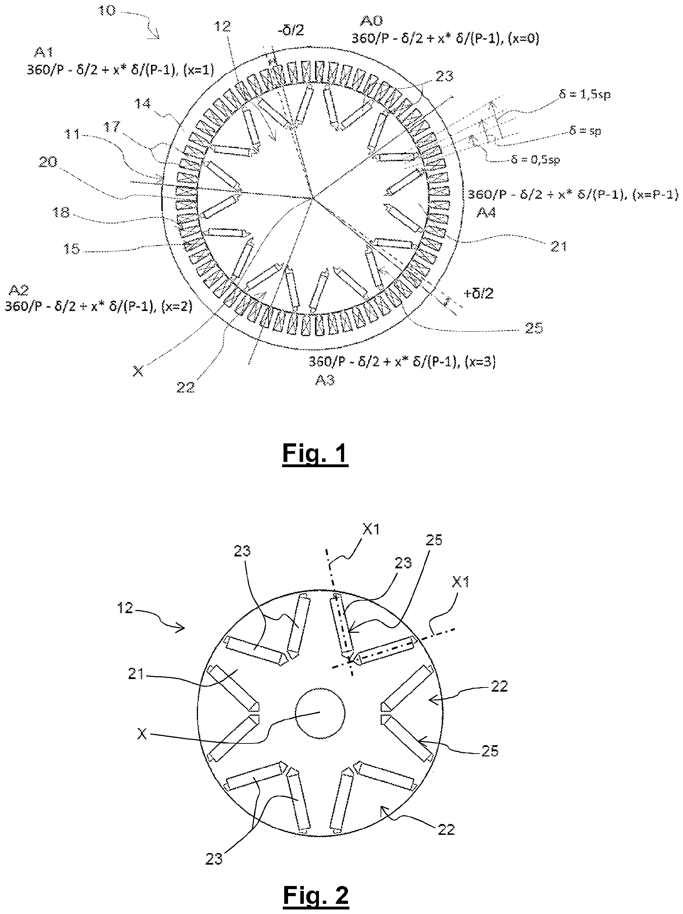

La figure 1 montre une machine électrique tournante 10 comportant un stator 11 bobiné, qui pourra être polyphasé, entourant co-axialement un rotor 12 ayant un axe de rotation X. Le stator 11 et le rotor 12 sont séparés entre eux par un entrefer s'étendant entre la périphérie externe du rotor 12 et la périphérie interne du stator 11.

Plus précisément, le stator 11 comporte un corps 14 et un bobinage 15 représenté schématiquement par des croix. Le corps de stator 14 consiste en un empilement axial de tôles planes. Le corps 14 comporte des dents 17 réparties angulairement de manière régulière. Ces dents 17 délimitent des encoches 18, de telle façon que chaque encoche 18 est délimitée par deux dents 17 successives. Les encoches 18 débouchent axialement dans les faces d'extrémité axiales du corps 14. Les encoches 18 sont également ouvertes radialement vers l'intérieur du corps 14.

Le stator 11 est muni de pieds de dent 20 du côté des extrémités libres des dents 17. Chaque pied de dent 20 s'étend circonférentiellement de part et d'autre d'une dent 17 correspondante.

Le bobinage 15 logé dans les encoches 18 est obtenu par exemple à partir de fils continus recouverts d'émail ou à partir d'éléments conducteurs en forme d'épingles reliées entre elles par soudage.

Le bobinage 15 comprend un nombre de phases compris entre 3 et 6. Un nombre d'encoches 18 par pôle et par phase est de préférence strictement supérieur à 1 et inférieur ou égal à 3.

Par ailleurs, comme on peut le voir sur la figure 2, le rotor 12 d'axe X comporte un corps 21 formé par un empilement axial de tôles planes afin de diminuer les courants de Foucault. Le corps 21 est réalisé dans un matériau magnétique.

Le rotor 12 comporte en outre des pôles 22 formés par au moins deux aimants permanents 23, qui en section, définissent une forme en V. Ces aimants 23 sont disposés à l'intérieur de cavités 25 correspondantes.

Par "forme en V", on entend le fait qu'en coupe transversale, les axes longitudinaux X1 d'au moins un ensemble de deux aimants 23 du pôle 22 forment un angle non nul entre eux. Les cavités 25 associées à un pôle 22 sont en l'occurrence distinctes l'une de l'autre. En variante, les cavités 25 pourraient se rejoindre au niveau de la pointe du V.

Les aimants permanents 23 pourront être réalisés en ferrite ou en terre rare selon les applications et la puissance recherchée de la machine. En variante, les aimants permanents 23 peuvent être de nuance différente pour réduire les coûts.

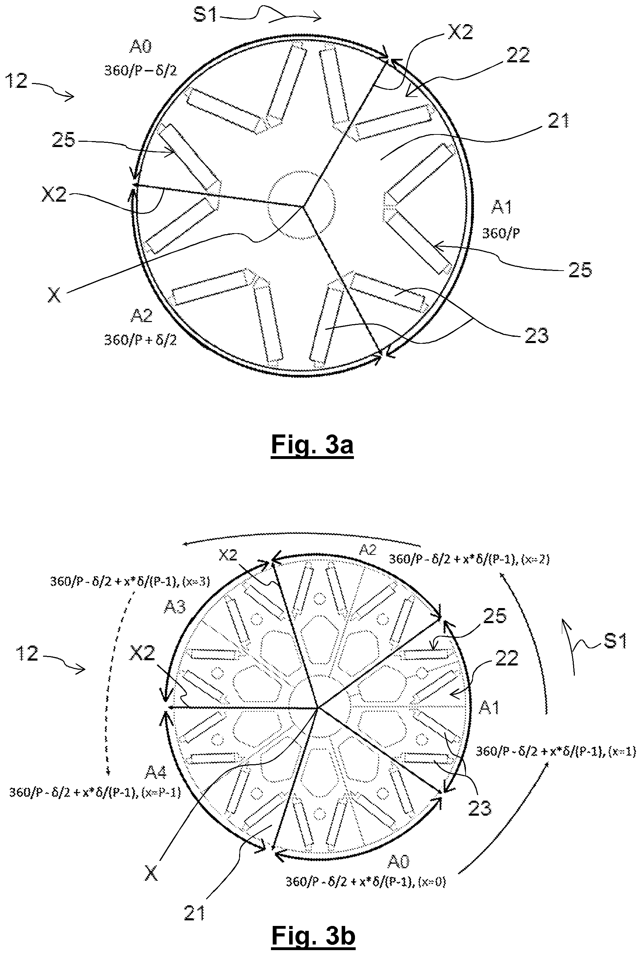

Dans le mode de réalisation des figures 3a et 3b, deux angles polaires doubles Ax successifs correspondant chacun à une étendue circonférentielle de deux pôles 22 adjacents présentent un écart angulaire l'un par rapport à l'autre qui est fonction d'un paramètre de décalage angulaire lié à un pas statorique.

L'angle Ax est mesuré entre deux axes X2 de symétrie d'un pôle séparés entre eux par un pôle 22.

On définit un pas statorique abrégé en "sp" pour "slot pitch" en anglais comme étant égal à 360 divisé par le nombre de dents 17 du stator 11. Le paramètre de décalage angulaire $\delta$ est compris entre 0.5 et 1.5 fois le pas statorique sp. La figure 1 montre ainsi un paramètre $\delta$ valant respectivement la moitié du pas statorique ($\delta$ =0.5sp), le pas statorique sp ($\delta$=sp), et 1.5 fois le pas statorique ($\delta$=1.5sp).

En l'occurrence, un angle polaire double Ax est défini par la relation suivante:

$$Ax=360/P-\delta/2+x^*\ \delta/(P-1)$$

- x étant le rang de l'angle polaire double, soit un nombre entier compris entre 0 et P-1,
- P étant le nombre de paires de pôles 22 du rotor 12 qui pourra notamment être compris entre 3 et 10,
- $\delta$ étant le paramètre de décalage angulaire.

Le rang x de l'angle polaire double Ax est croissant lorsqu'on suit un sens de parcours S1 donné suivant une circonférence du rotor 12. Par exemple, on choisit un premier angle A0 pour lequel x vaut 0, le deuxième angle A1 que l'on rencontre suivant le sens de parcours S1 correspond à x valant 1, le troisième angle A2 que l'on rencontré suivant le sens de parcours S1 correspond à x valant 2, et ainsi de suite jusqu'au dernier angle A(P-1)pour lequel x vaut P-1. Le sens de parcours S1 pourra être choisi suivant le sens horaire ou anti-horaire.

La figure 3a montre un exemple de réalisation pour un rotor 12 ayant trois paires de pôles (P=3) tandis que les figures 1 et 3b montrent un exemple de réalisation pour un rotor 12 ayant cinq paires de pôles (P=5). Ainsi, le premier angle A0 présente une valeur de 360/P-$\delta$/2 et le dernier angle A(P-1) une valeur de 360/P-$\delta$/2, les angles intermédiaires Ax variant d'un angle mécanique qui est fonction du paramètre de décalage angulaire $\delta$, soit d'un valeur de x* $\delta$/(P-1).

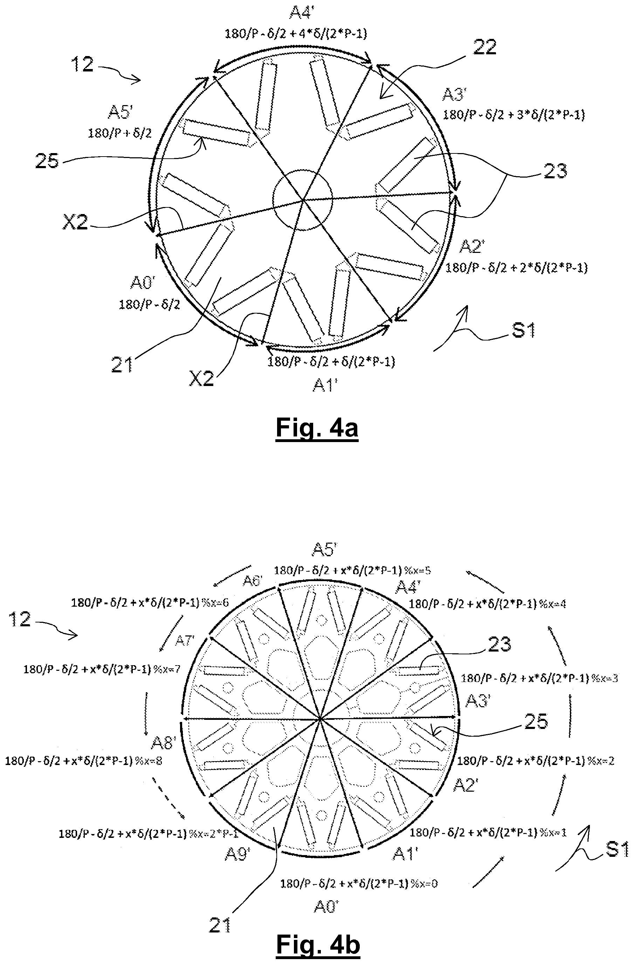

Dans le mode de réalisation des figures 4a et 4b, deux angles polaires Ax' successifs correspondant chacun à une étendue circonférentielle d'un pôle 22 présentent un écart angulaire l'un par rapport à l'autre qui est fonction du paramètre de décalage angulaire $\delta$ lié au pas statorique sp. L'angle Ax' est mesuré entre deux axes X2 de symétrie successifs de deux pôles adjacents 22.

En l'occurrence, un angle polaire Ax' est défini par la relation suivante:

$$Ax'=180/P-\delta/2+x^*\ \delta/(2P-1)$$

- x étant le rang de l'angle polaire, soit un nombre entier compris entre 0 et 2P-1,
- P étant le nombre de paires de pôles 22,
- $\delta$ étant le paramètre de décalage angulaire.

Le rang x de l'angle polaire Ax' est croissant lorsqu'on suit un sens de parcours donné S1 suivant une circonférence du rotor 12. Par exemple, on choisit un premier angle A0' pour lequel x vaut 0, le deuxième angle A1' que l'on rencontre suivant le sens de parcours S1 correspond à x valant 1, le troisième angle A2' que l'on rencontré suivant le sens de parcours S1 correspond à x valant 2, et ainsi de suite jusqu'au dernier angle pour lequel x vaut 2P-1. Le sens de parcours S1 pourra être choisi suivant le sens horaire ou anti-horaire.

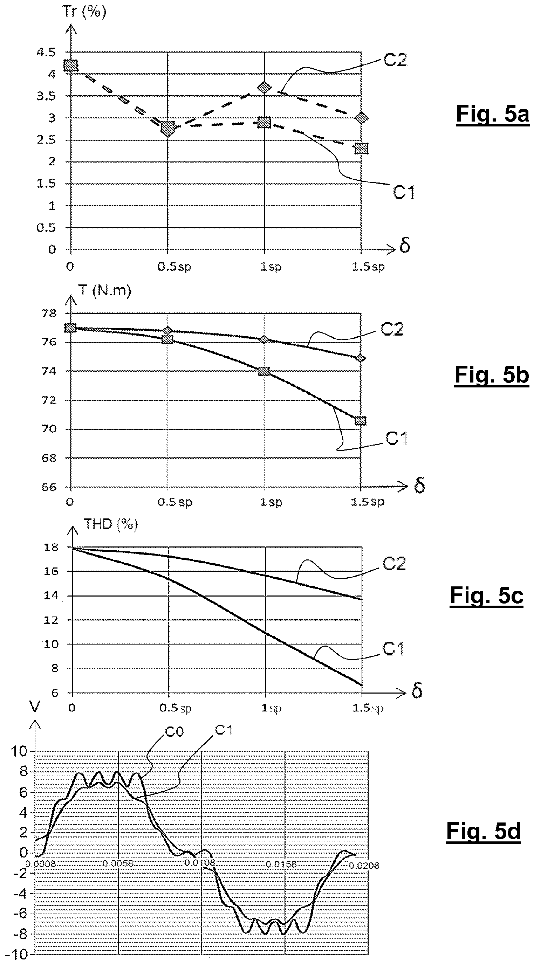

Les figures 5a à 5c montrent respectivement l'évolution des ondulations de couple Tr, du couple T, et des distorsions harmoniques totales THD en fonction du paramètre de décalage angulaire $\delta$ respectivement pour un décalage angulaire polaire (cf. courbes C1) ou un décalage angulaire dans une paire de pôles (cf. courbes C2). Ces courbes ont été obtenues pour une machine à trois paires de pôles, 54 encoches et un bobinage à épingles double triphasé ayant un couple maximal à 1000tours /min. Il est à noter que la valeur $\delta$=0 correspond à un rotor à pôles symétriques classique.

On observe que le gain en réduction d'ondulation de couple Tr et en distorsion harmoniques totales THD est significatif à partir d'une valeur de paramètre de décalage angulaire $\delta$ valant 0.5sp.

La figure 5d montre également que la tension à vide obtenue avec le rotor 12 selon l'invention est plus régulière qu'avec un rotor 12 classique (cf. courbe C0).

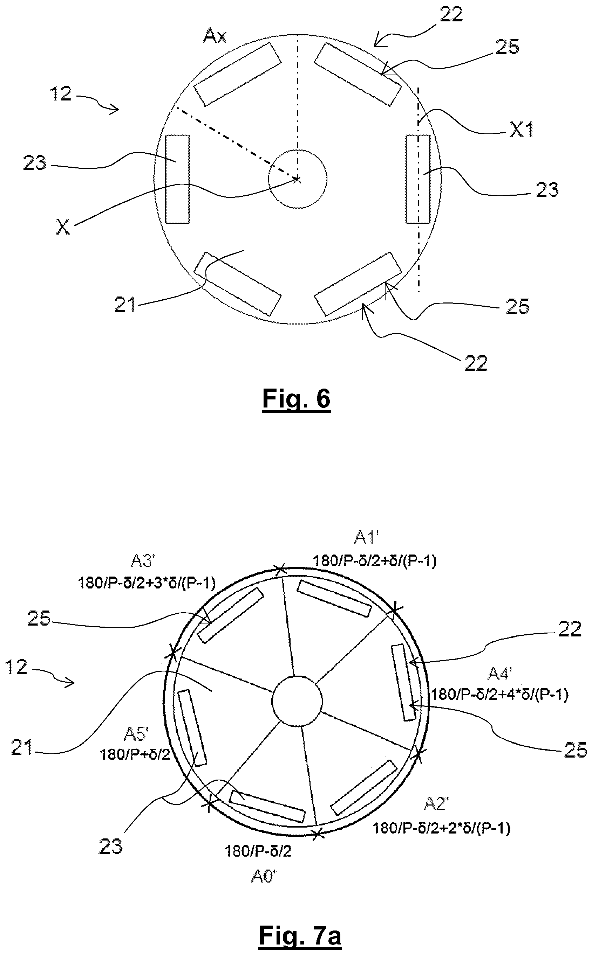

La figure 6 montre une variante de réalisation du rotor 12 selon l'invention muni d'aimants 23 orientés orthoradialement. Ainsi, en coupe transversale, un axe longitudinal X1 de l'aimant 23 est orienté orthoradialement par rapport à l'axe X du rotor 12.

En variante chaque pôle est formé de deux aimants permanents qui en section, définissent une forme en V, et un aimant additionnel orienté orthoradialement par rapport à l'axe X du rotor 12.

En variante chaque pôle est formé de deux aimants permanents qui en section, définissent une forme en V, et deux autres aimants permanents qui en section, définissent une autre forme en V imbriquée dans la première forme en V c'est-à-dire que en coupe transversale, les axes longitudinaux X1 d'au moins un ensemble des quatre aimants 23 du pôle 22 forment un angle non nul entre eux.

Dans le cas du rotor 12 de la figure 6, les ondulations de couple Tr ont chuté de 11% à moins de 4% sans réduction sensible du couple fourni (non illustré). La distorsion harmonique totale THD est diminuée de moitié par rapport à sa valeur initiale sans décalage angulaire (δ=0) (non illustré).

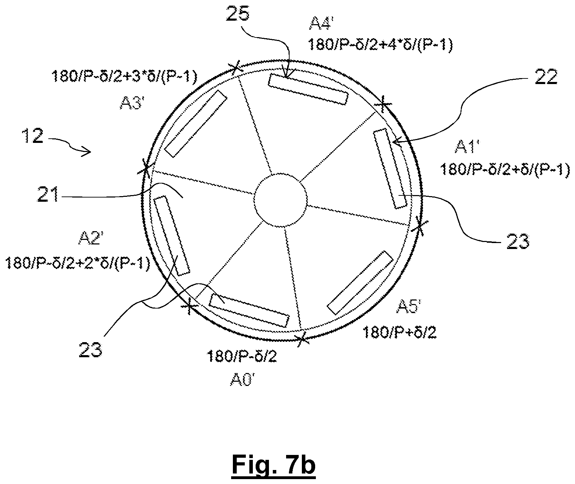

Les figures 7a et 7b sont des vues illustrant l'introduction d'un angle polaire Ax choisi de façon aléatoire. Comme cela ressort du tableau ci-dessous, une distribution aléatoire permet également d'obtenir des performances améliorées de la machine électrique:

|  | Couple T (N.m) | Ondulations de couple Tr (%) | THD (%) |
|---|---|---|---|
| Cas initial (δ=0) | 37.3 | 11 | 23.4 |
| Cas1 (fig. 7a) | 33.1 | 4.8 | 18.9 |
| Cas2 (fig. 7b) | 33.1 | 3.7 | 20.8 |

Le cas 1 est basé sur la distribution angulaire de la figure 7a et le cas 2 est basé sur la distribution angulaire de la figure 7b. La distribution aléatoire peut être effectuée avec différentes valeurs d'angles de décalage variant entre 0.5*sp et 1.5*sp. Les cas 1 et le cas 2 ont été obtenus en choisissant un paramètre de décalage angulaire δ valant 1.5sp et en changeant le rang de l'angle de façon aléatoire suivant la circonférence du rotor 12. Ainsi, on pourra utiliser les formules précitées permettant de définir les angles Ax et Ax' en prenant un rang x d'angle aléatoire suivant le sens de parcours S1.

A la figure 7a l'angle polaire A'x défini précédemment est choisi de façon aléatoire, de sorte que les angles A'0, A'1, A'2, A'3, A'4 et A'5 sont distribués aléatoirement sur la circonférence du rotor. Suivant le sens de parcours S1 les angles sont successivement A'0, A'2, A'4, A'1, A'3, A'5.

A la figure 7b, la distribution aléatoire de l'angle polaire A'x est telle que suivant le sens de parcours S2, les angles sont successivement A'0, A'5, A'1, A'4, A'3, A'2.

Il est à noter que l'invention peut être mise en oeuvre indépendamment du sens de rotation du rotor 12. En outre, les résultats obtenus sont les mêmes quel que soit le mode de fonctionnement de la machine électrique 10 tournante en mode moteur ou en mode générateur.

Bien entendu, la description qui précède a été donnée à titre d'exemple uniquement et ne limite pas le domaine de l'invention dont on ne sortirait pas en remplaçant les différents éléments par tous autres équivalents.

En outre, les différentes caractéristiques, variantes, et/ou formes de réalisation de la présente invention peuvent être associées les unes avec les autres selon diverses combinaisons, dans la mesure où elles ne sont pas incompatibles ou exclusives les unes des autres.

**Revendications**

1. Machine électrique tournante (10) notamment pour véhicule automobile comportant:

   - un stator (11) comprenant un corps (14) muni de dents (17) délimitant des encoches (18) et un bobinage (15) logé dans les encoches (18) du corps de stator (14),
   - un rotor (12) comprenant un corps (21) et des pôles (22) formés par des aimants permanents (23),
   - deux angles polaires (Ax') successifs correspondant chacun à une étendue circonférentielle d'un pôle (22) ou
   - deux angles polaires doubles (Ax) successifs correspondant chacun à une étendue circonférentielle de deux pôles (22) adjacents,
   - les angles polaires successifs et les angles polaires doubles successifs présentant un écart angulaire l'un par rapport à l'autre qui est fonction d'un paramètre de décalage angulaire (δ) lié à un pas statorique (sp),

   **caractérisée en ce que** les rangs des angles polaires (Ax') ou angles polaires doubles (Ax) sont distribués aléatoirement sur la circonférence du rotor (12),

   l'angle polaire double (Ax) étant défini par la relation suivante:

$$Ax=360/P-\delta/2+x^*\ \delta/(P-1)$$

- x étant le rang de l'angle polaire double, soit un nombre entier compris entre 0 et P-1,
- P étant le nombre de paires de pôles (22),
- $\delta$ étant le paramètre de décalage angulaire,

l'angle polaire (Ax') étant défini par la relation suivante:

$$Ax'=180/P-\delta/2+x^*\ \delta/(2P-1)$$

- x étant le rang de l'angle polaire, soit un nombre entier compris entre 0 et 2P-1,
- P étant le nombre de paires de pôles (22),
- $\delta$ étant le paramètre de décalage angulaire.

**2.** Machine électrique tournante selon la revendication 1, **caractérisée en ce que** le paramètre de décalage angulaire ($\delta$) est compris entre 0.5 et 1.5 fois le pas statorique (sp).

**3.** Machine électrique tournante selon l'une quelconque des revendications 1 à 2, **caractérisée en ce que** chaque pôle (22) est formé par deux aimants permanents (23) ayant une forme en V.

**4.** Machine électrique tournante selon l'une quelconque des revendications 1 à 3, **caractérisée en ce que** chaque pôle (22) est formé par un aimant permanent (23) orienté orthoradialement par rapport à un axe (X) du rotor (12).

**5.** Machine électrique tournante selon l'une quelconque des revendications 1 à 4, **caractérisée en ce qu'**un nombre d'encoches (18) par pôle (22) et par phase est compris entre 1 et 3.

**6.** Machine électrique tournante selon l'une quelconque des revendications 1 à 5, **caractérisée en ce qu'**un nombre de paires de pôles (22) est compris entre 3 et 10.

**7.** Machine électrique tournante selon l'une quelconque des revendications 1 à 6, **caractérisée en ce que** le bobinage (15) comprend un nombre de phases compris entre 3 et 6.

**Patentansprüche**

**1.** Elektrisch umlaufende Maschine (10), insbesondere für ein Kraftfahrzeug, die Folgendes umfasst:

- einen Stator (11), der einen Körper (14), der über Zähne (17), die Nuten begrenzen (18), verfügt, und eine Wicklung (15), die in den Nuten (18) des Statorkörpers (14) untergebracht ist, beinhaltet,
- einen Rotor (12), der einen Körper (21) und Pole (22), die durch Permanentmagneten (23) gebildet werden, beinhaltet,
- wobei zwei aufeinanderfolgende Polwinkel (Ax') jeweils einer Umfangserstreckung eines Pols (22) entsprechen oder
- wobei zwei aufeinanderfolgende Doppelpolwinkel (Ax) jeweils einer Umfangserstreckung von zwei benachbarten Polen (22) entsprechen,
- wobei die aufeinanderfolgenden Polwinkel und die aufeinanderfolgenden Doppelpolwinkel einen Winkelabstand mit Bezug zueinander aufweisen, der von einem Winkelversatzparameter ($\delta$) abhängt, der mit einer Statorteilung (sp) verbunden ist,

**dadurch gekennzeichnet, dass** die Ränge der Polwinkel (Ax') oder Doppelpolwinkel (Ax) zufällig über den Umfang des Rotors (12) verteilt sind,

wobei der Doppelpolwinkel (Ax) durch die folgende Relation definiert wird:

$$Ax=360/P-\delta/2+x^*\ \delta/(P-1)$$

- wobei x der Rang des Doppelpolwinkels ist, also eine ganze Zahl zwischen 0 und P-1 ist,
- wobei P die Anzahl von Paaren von Polen (22) ist,
- wobei δ der Winkelversatzparameter ist,

wobei der Polwinkel (Ax') durch die folgende Relation definiert wird:

$$Ax'=180/P-\delta/2+x*\ \delta/(2P-1)$$

- wobei x der Rang des Polwinkels ist, also eine ganze Zahl zwischen 0 und 2P-1 ist,
- wobei P die Anzahl von Paaren von Polen (22) ist,
- wobei δ der Winkelversatzparameter ist.

2. Elektrisch umlaufende Maschine nach Anspruch 1, **dadurch gekennzeichnet, dass** der Winkelversatzparameter (δ) zwischen dem 0,5-fachen und dem 1,5-fachen der Statorteilung (sp) beträgt.

3. Elektrisch umlaufende Maschine nach einem beliebigen der Ansprüche 1 bis 2, **dadurch gekennzeichnet, dass** jeder Pol (22) durch zwei Permanentmagneten (23) gebildet wird, die eine V-Form aufweisen.

4. Elektrisch umlaufende Maschine nach einem beliebigen der Ansprüche 1 bis 3, **dadurch gekennzeichnet, dass** jeder Pol (22) durch einen Permanentmagneten (23) gebildet wird, der mit Bezug auf eine Achse (X) des Rotors (12) orthoradial orientiert ist.

5. Elektrisch umlaufende Maschine nach einem beliebigen der Ansprüche 1 bis 4, **dadurch gekennzeichnet, dass** eine Anzahl von Nuten (18) pro Pol (22) und pro Phase zwischen 1 und 3 beträgt.

6. Elektrisch umlaufende Maschine nach einem beliebigen der Ansprüche 1 bis 5, **dadurch gekennzeichnet, dass** eine Anzahl von Paaren von Polen (22) zwischen 3 und 10 beträgt.

7. Elektrisch umlaufende Maschine nach einem beliebigen der Ansprüche 1 bis 6, **dadurch gekennzeichnet, dass** die Wicklung (15) eine Anzahl von Phasen zwischen 3 und 6 beinhaltet.


**Claims**

1. Rotary electric machine (10), notably for a motor vehicle, having:

- a stator (11) comprising a body (14) provided with teeth (17) delimiting notches (18) and a winding (15) seated in the notches (18) of the stator body (14),
- a rotor (12) comprising a body (21) and poles (22) formed by permanent magnets (23),
- two successive polar angles (Ax'), each corresponding to a circumferential extent of a pole (22), or
- two successive double polar angles (Ax), each corresponding to a circumferential extent of two adjacent poles (22),
- the successive polar angles and the successive double polar angles having an angular spacing in relation to one another that is a function of an angular offset parameter (δ) related to a slot pitch (sp), **characterized in that** the term numbers of the polar angles (Ax') or double polar angles (Ax) are distributed randomly on the circumference of the rotor (12),
the double polar angle (Ax) being defined by the following relationship:

$$Ax=360/P-\delta/2+x*\delta/(P-1)$$

- x being the term number of the double polar angle, i.e. a whole number between 0 and P-1,
- P being the number of pairs of poles (22),
- δ being the angular offset parameter,

the polar angle (Ax') being defined by the following relationship:

$$Ax'=180/P-\delta/2+x*\delta/(2P-1)$$

- x being the term number of the polar angle, i.e. a whole number between 0 and 2P-1,
- P being the number of pairs of poles (22),
- $\delta$ being the angular offset parameter.

2. Rotary electric machine according to Claim 1, **characterized in that** the angular offset parameter ($\delta$) is between 0.5 and 1.5 times the slot pitch (sp).

3. Rotary electric machine according to either of Claims 1 and 2, **characterized in that** each pole (22) is formed by two permanent magnets (23) forming a "V" shape.

4. Rotary electric machine according to any one of Claims 1 to 3, **characterized in that** each pole (22) is formed by a permanent magnet (23) oriented orthoradially in relation to an axis (X) of the rotor (12).

5. Rotary electric machine according to any one of Claims 1 to 4, **characterized in that** there are between 1 and 3 notches (18) per pole (22) and per phase.

6. Rotary electric machine according to any one of Claims 1 to 5, **characterized in that** there are between 3 and 10 pairs of poles (22).

7. Rotary electric machine according to any one of Claims 1 to 6, **characterized in that** the winding (15) comprises between 3 and 6 phases.

A1
360/P - δ/2 + x* δ/(P-1), (x=1)

-δ/2

A0
360/P - δ/2 + x* δ/(P-1), (x=0)

10

12

23

δ = 1,5sp

δ = sp

δ = 0,5sp

360/P - δ/2 + x* δ/(P-1), (x=P-1)
A4

14

11

17

20

18

15

21

A2
360/P - δ/2 + x* δ/(P-1), (x=2)

+δ/2

25

X

22

360/P - δ/2 + x* δ/(P-1), (x=3)
A3

## Fig. 1

X1

23

25

23

X1

12

21

22

25

X

22

23

22

## Fig. 2

**Fig. 3a**

**Fig. 3b**

A4'
180/P - δ/2 + 4*δ/(2*P-1)

12

A5'
180/P + δ/2

25

X2

A0'
180/P - δ/2

21

X2

22

A3'
180/P - δ/2 + 3*δ/(2*P-1)

23

A2'
180/P - δ/2 + 2*δ/(2*P-1)

S1

180/P - δ/2 + δ/(2*P-1)
A1'

**Fig. 4a**

A5'
180/P - δ/2 + x*δ/(2*P-1) %x=5

A6'
180/P - δ/2 + x*δ/(2*P-1) %x=6

A4'
180/P - δ/2 + x*δ/(2*P-1) %x=4

12

A7'
180/P - δ/2 + x*δ/(2*P-1) %x=7

23

180/P - δ/2 + x*δ/(2*P-1) %x=3

A3'

25

A8'
180/P - δ/2 + x*δ/(2*P-1) %x=8

180/P - δ/2 + x*δ/(2*P-1) %x=2

A2'

180/P - δ/2 + x*δ/(2*P-1) %x=2*P-1

180/P - δ/2 + x*δ/(2*P-1) %x=1

A9'

S1

180/P - δ/2 + x*δ/(2*P-1) %x=0

A0'

21

**Fig. 4b**

11

**Fig. 5a**

**Fig. 5b**

**Fig. 5c**

**Fig. 5d**

**Fig. 6**

**Fig. 7a**

**Fig. 7b**